# EUROPÄISCHE PATENTSCHRIFT

(11) **EP 0 905 626 B1**
(45) Veröffentlichungstag und Bekanntmachung des Hinweises auf die Patenterteilung: **26.03.2003**
(21) Anmeldenummer: 98117473.3
(22) Anmeldetag: 15.09.1998
(51) Int. Cl.: G06F 11/22, G01R 31/317

(54) **Verfahren zur Initialisierung eines an einen Diagnose-Bus angeschlossenen Steuergeräts**
Method to initialize a control device connected to a diagnostics bus
Procédé d'initialisation d'un dispositif de réglage connecté à un bus de diagnostique

(30) Priorität: 24.09.1997 DE 19742088
(43) Veröffentlichungstag der Anmeldung: 31.03.1999
(73) Patentinhaber: ROBERT BOSCH GMBH, 70442 Stuttgart (DE)
(72) Erfinder: Daiber, Martin, 73760 Ostfildern-Ruit (DE)

(56) Entgegenhaltungen:
- US-A- 5 304 935
- US-A- 5 526 311

## Beschreibung

Die Erfindung betrifft ein Verfahren zur Initialisierung eines an einen Diagnose-Bus angeschlossenen Steuergeräts nach dem Oberbegriff des Anspruchs 1.

### Stand der Technik

Beispielsweise in der Kraftfahrzeugtechnik sind einzelne Aggregate durch ein Bus-System (ISO 14230 Road Vehicle Diagnostic System), wie etwa eine Datenübertragsverbindung (K-Leitung, KWP 2000/Key Word Protocol 2000) vernetzt, über welches die Aggregate mit einem externen KFZ-Tester kommunizieren.

Ein Beispiel eines derartigen Aggregats ist das Kraftfahrzeug-Airbag-System, das ein Steuergerät aufweist, um auf der Grundlage von Kollisionsmeldungen die Airbags im Kraftfahrzeug gegebenenfalls auszulösen. Das hierfür an das Steuergerät angeschlossene Bus-System besteht aus einem Diagnose-Bus, um beispielsweise Fehlfunktionen des jeweiligen Aggregats oder eines Steuergeräts aufzudecken und gegebenenfalls anzuzeigen.

Zur Initialisierung beziehungsweise Reizung eines an einen Diagnose-Bus angeschlossenen Steuergeräts werden über die Empfangsdaten- beziehungsweise RXD-Leitung (RXD steht für Received Data- beziehungsweise Empfangsdatenleitung) eines im Steuergerät enthaltenen Mikrokontrollers die Signale des Kommunikations-Busses ausgewertet, der einen weiteren Teil eines den Diagnose-Bus enthaltenden Gesamt-Bus-Systems bildet. Dies geschieht auf der Basis eines Initialisierungs- beziehungsweise Reizwortes, vor allem eines 5-Baud-Reizwortes auf zwei Arten:
1) Es erfolgt eine Abtastung auf High/Low beziehungsweise einen logischen Zustand hoch/niedrig mit einem vorgegebenen Abtasttakt von bevorzugt 10 ms. Entsprechende Informationen werden dabei direkt aus einem Port(Parallelschnittstellen)-Register einer Schnittstelle zwischen dem Steuergerät und dem Diagnose-Bus gelesen.
2) Das Empfangsregister wird ausgelesen und seine Statusinformation wird analysiert. Das Empfangsregister wird beschrieben, sobald ein Übergang vom hohen zum niedrigen logischen Signalpegel auf dem Bus stattgefunden hat, wobei das Abtasten der Diagnoseinformation vom Empfänger (Receiver) der Bus-Schnittstelle selbst durchgeführt wird.

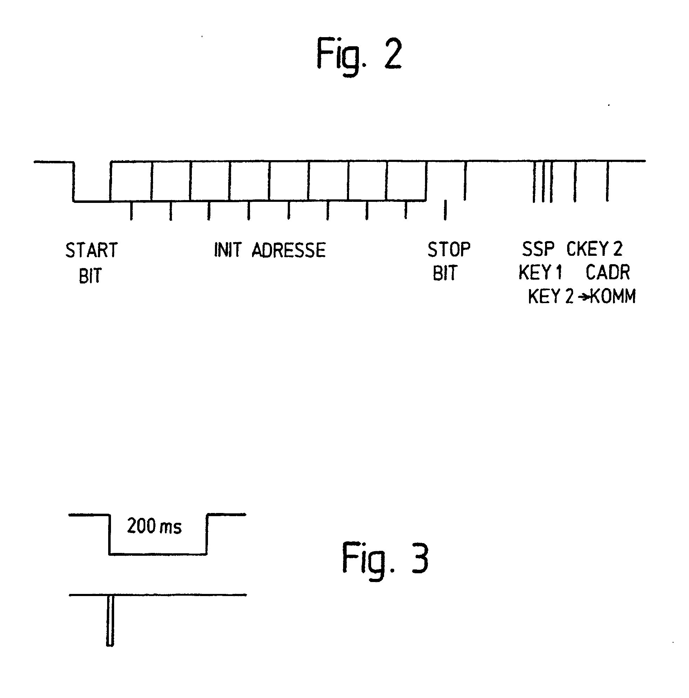

Die auf diese Weise erreichte und in Figur 2 schematisch gezeigte Initialisierung des Diagnose-Buses ist nicht ausreichend sicher, weil nicht gewährleistet ist, daß das an den Diagnose-Bus angeschlossene Steuergerät ungewollt, zum Beispiel durch Kommunikationsdaten des Testers oder anderer Busteilnehmer gereizt beziehungsweise initialisiert wird.

### Vorteil der Erfindung

Das Verfahren mit den Merkmalen des Hauptanspruchs weist demgegenüber den Vorteil auf, daß die Initialisierung zuverlässig verriegelt beziehungsweise unterbunden wird, wenn das Reizwort nicht beziehungsweise nicht eindeutig erkannt werden konnte. Mit anderen Worten wird die Initialisierung verworfen und auf eine neue Initialisierung gewartet, wenn während der Reizwort-Initialisierung nur ein gefülltes Empfangs-Byte existiert, das keinen Framing-Error (Stop-Bit 0 des Empfangsregisters) aufweist (erstes Kriterium).

Weitere vorteilhafte Ausgestaltungen der Erfindung sind den Unteransprüchen zu entnehmen.

In besonders vorteilhafter Weise wird nach dem Ende des Reizwortes bis zum Aussenden eines Speed-Sychronization-Pattern SSP (SSP = Geschwindigkeitssynchronisationsmuster) ein weiteres Beobachtungsintervall eingeschoben und geprüft, ob während dieses Intervalls ein Übergang vom hohen zum niedrigen logischen Signalpegel detektiert beziehungsweise festgestellt wird oder nicht, wobei die Initialisierung verworfen wird, wenn dieser Übergang, durch ein gefülltes Empfangs-Byte, detektiert wird. Dies stellt ein zweites Kriterium dar, mit dem zuverlässig verhindert werden kann, daß ein am Diagnose-Bus angeschlossenes Steuergerät ungewollt gereizt oder initialisiert wird.

Ein drittes Kriterium besteht darin, daß ein Initialisierungsmodul, das einen Teil einer herkömmlichen Schaltung zur Implementierung des Diagnose-Busses bildet, in den Status "inaktiv" geschaltet wird, sobald der Initialisierungsvorgang abgeschlossen ist und eine Kommunikation startet. Durch diese Maßnahme werden Störungen von eigengesendeten Signalen verhindert, die gegebenenfalls falsch interpretiert werden könnten, und es wird gewährleistet, daß Signale von anderen am Bus angeschlossenen Steuergeräten nicht als zusätzliche Reizung oder Initialisierung interpretiert werden.

### Zeichnung

Die Erfindung wird anhand der folgenden Figuren näher erläutert. Es zeigen:
- Figur 1a: einen Überblick eines Bus-Systems,
- Figur 1b: schematisch ein an einen Diagnose-Bus angeschlossenes Steuergerät,
- Figur 2: schematisch den Aufbau einer Intitialisierung des gemäß Figur 1 an einen Diagnose-Bus angeschlossenen Steuergeräts, und
- Figur 3: Bus-Signale entsprechend einem Framing-Error beziehungsweise einem hiervon abweichenden Signal.

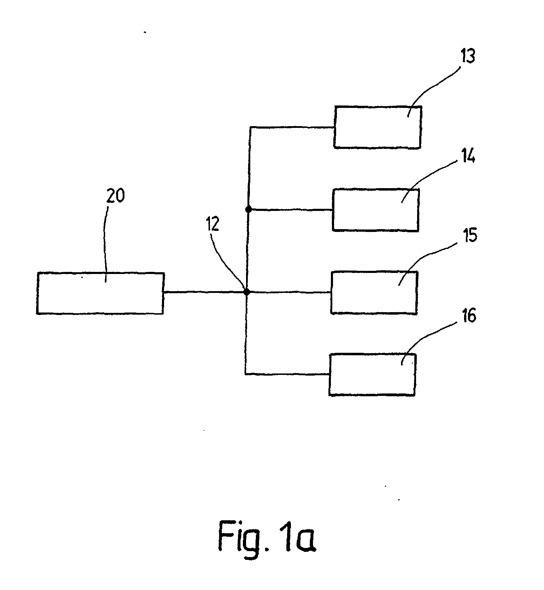

Figur 1a zeigt einen generellen Kommunikations-Bus im Kraftfahrzeug. Auf einer K-Leitung 12 unterhalten sich ein Tester 20 mit dezentralen Steuergeräten (ECU-Electronic-Control-Unit) 13, 14, 15, 16.

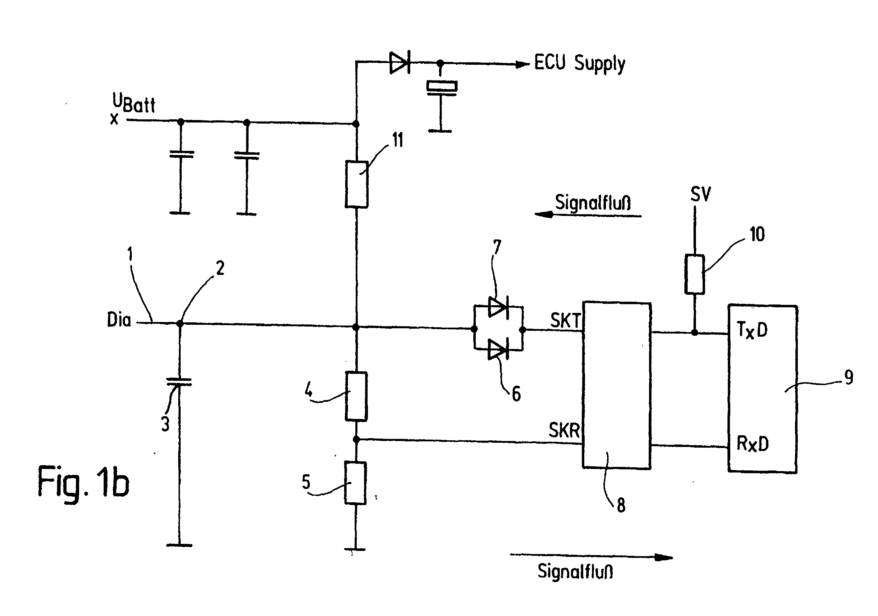

Figur 1b zeigt schematisch ein Steuergerät, das, wie eingangs erläutert, zum Beispiel Teil eines Airbag-Systems auf K-Leitungs-Basis bildet, und das eingangsseitig an einen Diagnose-Bus 1 angeschlossen ist und folgende Elemente aufweist: einen Eingang 2, der über einen Kondensator 3 zur Störungsunterdrückung einstrahlender Signale an Masse gelegt ist, einen aus zwei in Reihe geschalteten Widerständen 4 und 5 bestehenden Spannungsteiler, der mit dem Eingang 2 verbunden und von einer, über einen Widerstand 11 entkoppelten Versorgungsspannung U_{BATT} beaufschlagt ist, um am Verknüpfungspunkt der Widerstände 4 und 5 einen Spannungspegel von U_{BATT} bereitzustellen, falls keine Kommunikation stattfindet (default value für den Empfang), und zwei parallel geschaltete Dioden 6 und 7, die mit dem Eingangsanschluß verbunden und so geschaltet sind, daß ihre Anoden vom Eingangssignal beaufschlagt sind, während ihre Kathoden gemeinsam mit dem Ausgang einer Schnittstelle 8 verbunden sind, dies um den Kommunikations-Bus von einem nicht sendenden Airbag-Steuergerät zu entkoppeln, der außerdem der entkoppelten Versorgungsspannung über den Widerstand 11 zugeführt wird.

Eingangsseitig ist die Schnittstelle 8 mit SKR an den Abzweig vom Spannungsteiler 4, 5 angeschlossen (low = -0,30 bis 2,1V, high = 2,8V bis U_{BATT} + 1V), ausgangsseitig an dem RxD Eingang (RxD steht für Received Data beziehungsweise Empfangsdaten) eines Mikrokontrollers 9, dessen TxD Ausgang (TxD steht für Transmission Data beziehungsweise Sendedaten) mit dem Eingang der Schnittstelle 8, sowie über einen Widerstand 10 mit der stabilisierten internen Geräteversorgungsspannung verbunden ist. Ausgangsseitig ist die Schnittstelle 8 an die zwei parallel geschalteten Dioden 6 und 7 angeschlossen.

Das erfindungsgemäße Verfahren zur Initialisierung des an den Diagnose-Bus 1 angeschlossenen Steuergeräts wird anhand von Figur 1 in Verbindung mit Figur 2 und 3 nunmehr näher erläutert.

Das erfindungsgemäße Verfahren sieht demnach eine Verriegelung der Initialisierung, die ständig auf Bus-Signale reagieren muß, gegenüber schnellen Kommunikationssignalen (beispielsweise 10.417 Baud) durch drei Kriterien vor.
1. Während des Einlesens der 5-Baud-Adresse beziehungsweise des Reizwortes wird während der Abtastung geprüft, ob das Empfangsregister beschrieben ist (RDRF = 1) (RDRF steht für Received Data Register Full beziehungsweise "Empfangsdaten-Register voll"; mit anderen Worten, handelt es sich bei RDRF um eine Flagge, die gesetzt ist, wenn sie den Wert "1" hat). Falls dies der Fall ist, liegt ein Übergang vom hohen zum niedrigen logischen Signalpegel auf der K-Leitung des Busses vor. Ein 5-Baud-Signal verursacht in diesem Fall einen Framing-Error (Stop-Bit hat niedrigen logischen Pegel, das heißt, das Stop-Bit des Empfangsregisters ist 0). Eine Kommunikation auf der schnellen Baud-Rate verursacht hingegen keinen Framing-Error (erstes Kriterium). Zur Form der entsprechenden Signale wird auf Figur 3 verwiesen, in welcher das obere, 200 ms breite Signal einen Framing Error ("5 Baud/1 Bit"-Byte im RDX-Register) darstellt, während das untere, schmalere Signal einer Signalübertragung mit 10417 Baud/1 Byte im RDX-Register entspricht.
   Das heißt, während der 5-Baud-Initialisierung darf ein gefülltes Empfangs-Byte ermittelt werden, das einen Framing-Error hat. Andernfalls wird die Initialisierung verworfen und es wird auf eine neue Initialisierung gewartet.
2. Gemäß dem zweiten Kriterium wird nach dem Ende des 5-Baud-Reizworts bis zum Aussenden des Speed-Synchronization-Pattern (SSP) weitere 100 ms bis 400 ms beobachtet, um folgendes zu erreichen: Nach der Abtastung auf ein Stop-Bit wird die RxD-Schnittstelle ausgelesen und gelöscht, um einen "Initialisierungszustand" der Schnittstelle zu erreichen (Dummy read). Nun wird bis zum Versenden des SSP (mit diesem Signal kann der Tester die Baud-Rate eines Bus-Teilnehmers ausmessen, wobei das SSP den Wert "55H" (= 55 Hex) einnimmt) überprüft, ob sich ein Byte im Empfangsregister befindet. In diesem Zeitabschnitt darf kein Byte empfangen werden. Ist dies trotzdem der Fall, wird die Initialisierung verworfen und auf eine neue Initialisierung gewartet.
3. Gemäß dem dritten Kriterium wird das Initialisierungsmodul in den Status "inaktiv" geschaltet, sobald der Initialisierungsvorgang abgeschlossen ist und eine Kommunikation startet. Dies beugt zwei Arten von Störungen vor:
   a. Störungen von eigengesendeten Signalen, die von der Initialisierungsroutine "mitgehört" und gegebenenfalls fälschlicherweise als Reizworte interpretiert werden, und
   b. einer Interpretation von Signalen anderer am Bus angeschlossener Steuergeräte als (zusätzliche) Reizung bei funktionaler Initialisierung.

Folgende Vorteile werden durch das vorstehend erläuterte erfindungsgemäße Verfahren erhalten:

Durch geeignete Abfrage der Bus-Leitung kann statt deren L-Leitung zum Reizen und deren K-Leitung zur Kommunikation gemäß dem Stand der Technik ausschließlich die K-Leitung für beide Funktionen gemeinsam verwendet werden, und dies bei physikalischer und funktionaler Initialisierung.

In einem Werksmode ist eine 5-Baud-Reizung zusätzlich zur schnellen Kommunikation möglich, damit ein Gerät, das fälschlicherweise im Werksmode und nicht im Kundenmode ausgeliefert wurde, mit einem Kundentester analysiert werden kann. Dabei unterstützen die beiden vorstehend genannten Aspekte 1) und 2) des erfindungsgemäßen Verfahrens weitere im Programm befindliche Verriegelungen zwischen Werksmode und Kundenmode.

Schließlich ermöglichen die Aspekte 1) und 2) des erfindungsgemäßen Verfahrens eine sichere Überprüfung, ob es sich tatsächlich um eine Reizung und nicht um eine Diagnose-Information über den gesamten Zeitraum zwischen dem Start-Bit des 5-Baud-Reizwortes und der Antwort des Steuergeräts mittels SSP, also über ca. 2,1 Sekunden bis 2,4 Sekunden, handelt.

## Patentansprüche

1. Verfahren zur Initialisierung eines an einen Diagnose-Bus angeschlossenen Steuergeräts mittels eines Reizworts unter Auswertung von Signalen auf dem Diagnose-Bus über die RXD-Leitung eines im Steuergerät enthaltenen Mikrokontrollers, der ein Portregister und ein Empfangsregister enthält, aufweisend die Schritte:
Abtasten von Information aus dem Portregister auf den niedrigen/hohen logischen Zustand mit einem vorgegebenen Abtasttakt zur Erkennung des Reizworts, und
Auslesen des Empfangsregisters und Analysieren der Statusinformation,
**gekennzeichnet durch** die Schritte:
Prüfen zum Abtastzeitpunkt während des Einlesens des Reizworts, ob das Empfangsregister gesetzt ist, weil dann auf der K-Leitung des Diagnose-Busses ein Übergang vom hohen zum niedrigen logischen Signalpegel vorliegt, wobei ein Reizwort bei dieser Prüfung ein Stop-Bit 0 des Empfangsregisters und **dadurch** einen "Framing Error" verursacht, und
Akzeptieren der Initialisierung bei Vorliegen eines Framing Errors beziehungsweise andernfalls Verwerfen der Initialisierung und Warten auf einen weiteren Übergang vom niedrigen zum hohen logischen Signalpegel.

2. Verfahren nach Anspruch 1, **dadurch gekennzeichnet, daß** nach dem Ende des Reizwortes bis zum Aussenden eines Geschwindigkeitssynchronisationsmusters (SSP) ein weiteres Beobachtungsintervall eingeschoben und geprüft wird, ob in diesem Intervall ein Übergang vom hohen zum niedrigen logischen Signalpegel empfangen wird, wobei die Initialisierung verworfen wird, wenn dieser Übergang empfangen wird.

3. Verfahren nach Anspruch 1 oder 2, **dadurch gekennzeichnet, daß** ein Initialisierungsmodul in den Status "inaktiv" geschaltet wird, sobald der Initialisierungsvorgang abgeschlossen ist und eine Kommunikation startet.

4. Verfahren nach Anspruch 1, 2 oder 3, **dadurch gekennzeichnet, daß** das Reizwort ein 5-baud-Reizwort ist.

5. Verfahren nach Anspruch 2, 3, oder 4, **dadurch gekennzeichnet**, da**ß** das weitere Beobachtungsintervall 100ms bis 400ms beträgt.

6. Verfahren nach einem der Ansprüche 1 bis 5, **dadurch gekennzeichnet, daß** der Abtasttakt mit 10 ms vorgegeben ist.

## Claims

1. Method of initializing a control device connected to a diagnostics bus, using a prompting word, by evaluating signals on the diagnostics bus via the RXD line of a microcontroller which is contained in the control device and which contains a port register and a reception register, having the steps:
sampling of information from the port register on the low/high logic state with a predefined sampling clock for detecting the prompting word, and
reading out of the reception register and analysis of the status information, **characterized by** the steps:
checking, at the sampling time during the reading in of the prompting word, whether the reception register is set because a transition from the high logic signal level to the low logic signal level on the K line of the diagnostic bus, a prompting word bringing about a stop bit 0 of the reception register, and thus a framing error, during this check, and
acceptance of the initialization when a framing error is present or otherwise the initialization is rejected and waiting for a further transition from the low logic signal level to the high logic signal level.

2. Method according to Claim 1, **characterized in that**, after the end of the prompting word up to the emission of a speed synchronization pattern (SSP), a further observation interval is inserted and it is checked whether a transition from the high logic signal level to the low logic signal level is level received in this interval, the initialization being rejected if this transition is received.

3. Method according to Claim 1 or 2, **characterized in that** an initialization module is switched to the "inactive" state as soon as the initialization process is terminated and a communication starts.

4. Method according to Claim 1, 2 or 3, **characterized in that** the prompting word is a 5-baud prompting word.

5. Method according to Claim 2, 3 or 4, **characterized in that** the further observation interval is 100 ms to 400 ms.

6. The method as claimed in one of Claims 1 to 5, **characterized in that** the sampling clock is preset at 10 ms.

## Revendications

1. Procédé d'initialisation d'un appareil de commande raccordé à un bus de diagnostic à l'aide d'un mot d'excitation en exploitant les signaux sur le bus de diagnostic par la ligne RXD d'un microcontrôleur faisant partie de l'appareil de commande et qui comporte un registre de port et un registre de réception, comprenant les étapes suivantes :
détection de l'information du registre de port pour déterminer l'état logique bas/haut avec une cadence de détection prédéterminée pour reconnaître le mot d'excitation, lecture du registre de réception et analyse de l'information d'état,
**caractérisé par** les étapes suivantes :
contrôle à l'instant de détection pendant l'enregistrement du mot d'excitation si le registre de réception est mis car alors sur la ligne K du bus de diagnostic on a un passage d'un niveau de signal logique haut à un niveau de signal logique bas, un mot d'excitation pendant ce contrôle produisant un bit 0 du registre de réception et donc une « erreur de trame »,
accepter l'initialisation en présence d'erreur de trame ou d'une initialisation rejetée différemment et attendre une autre transition du niveau de signal logique bas passant au niveau haut.

2. Procédé selon la revendication 1,
**caractérisé en ce qu'**
à la fin du mot d'excitation jusqu'à l'émission d'un modèle de synchronisation de vitesse (SSP), on insère un autre intervalle d'observation et on vérifie si dans cet intervalle on a reçu une transition de niveau de signal logique d'un état haut à un état bas, l'initialisation étant rejetée si cette transition est reçue.

3. Procédé selon l'une quelconque des revendications 1 et 2,
**caractérisé en ce qu'**
on branche un module d'initialisation dans le mode « inactif » dès que l'opération d'initialisation est terminée et qu'une communication démarre.

4. Procédé selon l'une quelconque des revendications 1, 2 ou 3,
**caractérisé en ce que**
le mot d'excitation est un mot d'excitation à cinq bauds.

5. Procédé selon l'une quelconque des revendications 2, 3 ou 4,
**caractérisé en ce que**
l'autre intervalle d'observation est d'une durée de 100 ms à 400 ms.

6. Procédé selon l'une quelconque des revendications 1 à 5,
**caractérisé en ce que**
la cadence de détection est définie à 10 ms.
